# EUROPEAN PATENT SPECIFICATION

(11) **EP 0 646 142 B1**
(45) Date of publication and mention of the grant of the patent: **01.05.1996**
(21) Application number: 93911380.9
(22) Date of filing: 21.05.1993
(51) Int. Cl.: C08F 212/04

(54) **AN ADIABATIC PROCESS FOR THE PREPARATION OF ION EXCHANGE AND ADSORBENT COPOLYMERS**
EIN ADIABATISCHES VERFAHREN ZUR HERSTELLUNG VON IONAUSTAUSCHERN UND ABSORBIERENDE COPOLYMERE
PROCEDE ADIABATIQUE POUR LA PREPARATION DE COPOLYMERES ADSORBANTS ET A ECHANGE D'IONS

(30) Priority: 16.06.1992 US 899393
(43) Date of publication of application: 05.04.1995
(73) Proprietor: THE DOW CHEMICAL COMPANY, Midland, Michigan 48640 (US)
(72) Inventor: HARRIS, William, I., Midland, MI 48642 (US); SUBRAMONIAN, Suresh, Midland, MI 48642 (US)
(74) Representative: Burford, Anthony Frederick
(86) International application number: PCT/US93/04841
(87) International publication number: WO 93/25592

(56) References cited:
- GB-A- 1 252 153
- US-A- 3 817 965

## Description

Ion-exchange resins are used by industry to separate chemical species from solutions containing them. Such resins are prepared by substituting various functional groups onto a copolymer bead matrix. The functional groups are capable of associating with the impurities so as to remove them from solution. Ion-exchange resins may be cation-, anion-, or chelate-exchange resins, depending on the choice of functional group substituted onto the copolymer bead matrix. The copolymer bead matrix may also be used in preparing polymeric adsorbents, such as those disclosed in US-A-4,950,332.

The copolymer bead matrix is typically prepared by suspension polymerization of a finely divided organic phase comprising monovinylidene monomers like styrene, polyvinylidene monomers such as divinylbenzene, a free-radical initiator, and, optionally diluents which are either phase-separating or soluble; see, for example, US-A-4,224,415. The copolymer beads produced may be microporous, i.e., gellular in character, or macroporous, the result depending upon whether the phase-separating diluent is employed. The term "macroporous" as commonly used in the art means that the copolymer has both macropores and mesopores. The terms "microporous", "gel", and "macroporous" are well known in the art and generally describe the nature of the copolymer bead porosity. Microporous or gel copolymer beads have pore sizes on the order of less than 20 Angstroms (Å) (2 nm), while macroporous copolymer beads have both mesopores of from 20 Å to 500 Å (2-50 nm) and macropores of greater than 500 Å (50 nm). Gel and macroporous copolymer beads, as well as their preparation, are further discussed in US-A-4,256,840.

Recently, industry has focused on methods of preparing copolymer beads in multi-staged polymerizations, also known as seeded polymerization processes. Such copolymer beads are desirable due to good mechanical strength and osmotic shock resistance. Seeded polymerization processes can also prepare beads of relatively uniform size if the seed particles employed have similar size uniformity. US-A-4,419,245 and US-A-4,564,644 disclose processes wherein seed particles are suspended in a continuous medium and, thereafter, the seed particles are imbibed and polymerized with additional monomer to form copolymer beads. GB-A-1,151,480 discloses a process wherein copolymer beads are prepared from porous seed particles. EP-A-0 062 088 discloses the preparation of gel or macroporous copolymer beads by a seeded polymerization process and EP-A-0 168 622 describes the preparation of macroporous copolymer beads by a seeded polymerization process using macroporous seed particles.

Crosslinked copolymers for ion exchange and absorbent resins are conventionally prepared by suspension polymerization with one to three isothermal stages wherein the heat generated by the polymerization exotherm is removed to maintain the isothermal conditions. The prior art conventional technology requires a long cycle time of 10-20 hours per batch and generates high polymer waste, especially with low crosslink recipes. In addition, reactors require excess heat removal capacity to maintain the isothermal conditions.

US-A-4,239,669 teaches the emulsion polymerization of vinyl aromatic monomer and conjugated diene under adiabatic conditions in a continuous flow agitated reactor. The phase ratio is held low to hold the temperature to 80-100°C. The emulsion particle size is 1000-1500 Å (100-150 nm). This patent does not refer to the preparation of a suspension bead product and the particles produced are not hard crosslinked bead polymer used in the production of ion exchange resins.

GB-A-1,252,153 discloses the suspension polymerization of vinyl aromatic monomers at temperatures between 50 to 150°C, but the polymers are not crosslinked and the process is not adiabatic.

This invention concerns the preparation of ion exchange copolymers characterized by polymerizing the monomer phase in the presence of the aqueous phase under substantially adiabatic conditions. A substantial amount of the heat of polymerization is not removed but is used to raise the temperature of the reactor contents. Reaction kinetics are substantially accelerated resulting in a very short polymerization time at the final adiabatic temperature, resulting in better reactor utilization and increased product throughput. In addition, less reactor waste is generated leading to cleaner reactors and less downtime.

More particularly, the present invention concerns a process for making crosslinked copolymer beads suitable for polymeric adsorbents and ion-exchange resins characterized by:
(a) providing a suspension of a monomer mixture within a continuous aqueous suspending medium, the monomer mixture comprising at least one monoethylenically unsaturated monomer selected from styrene, paravinyltoluene, vinyltoluene, vinylbenzyl chloride or ethylvinylbenzene in an amount of from 20 to 99.96 weight percent based on total weight of monomer mixture, at least one polyethylenically unsaturated monomer selected from divinylbenzene, ethylene glycol diacrylate, ethylene glycol dimethacrylate or mixtures thereof in an amount of from 0.04 to 80 weight percent based on total weight of monomer mixture, and an effective amount of free-radical polymerization initiator;
(b) maintaining the suspension under adiabatic conditions sufficient to polymerize the monomer mixture and obtain copolymer beads, the conditions including retention within the suspension of a substantial amount of exothermic heat evolved during polymerization of the monomers to copolymer, such that the retention of the exothermic heat results in a rise in temperature of the suspension to at least 120°C for a time sufficient to polymerize at least 90 weight percent of the polymerizable monomer based on total weight of the monomer in the mixture; and
(c) recovering the copolymer beads from the suspension.

Polyethylenically unsaturated monomers useful in the present invention are divinylbenzene, ethylene glycol diacrylate and ethylene glycol dimethacrylate. Such monomers are present in an amount of from 0.04 to 80 weight percent based on total weight of the monomer mixture. Monoethylenically unsaturated monomers useful in the present invention are styrene, paravinyltoluene, vinyltoluene, vinylbenzyl chloride and ethylvinylbenzene. Such monomers are present in an amount of from 20 to 99.96 weight percent based on the total weight of the monomer mixture. With aromatic and acrylate monomers the conversion is preferably in excess of 97 weight percent.

The free-radical initiator employed is advantageously selected from peroxides, peroxyesters and azo compounds such as, for example, benzoyl peroxide, *t*-butyl peroctoate and *t*-butyl perbenzoate. The initiator is advantageously employed in an effective amount of from at least 0.05 weight percent to 2.0 weight percent based on the weight of the monomers.

The monomers can be added to the suspending medium in an inert diluent such as, for example, *iso*-octane, amyl alcohol, *t*-butyl alcohol, *sec*-butyl alcohol and toluene. The suspending medium is water containing suspending agents such as, for example, gelatins, carboxymethyl methylcellulose, polyvinyl alcohols, inorganic stabilizers such as tricalcium phosphate, bentonite clays and zinc hydroxides. The monomers can be imbibed into a seed polymer or a portion of the monomer can be added intermittently or continuously as the polymerization proceeds. For seeded recipes surfactants such as sodium lauryl sulfate are advantageously employed. The suspension is advantageously maintained at an initial temperature of at least 40°C, preferably at least 70°C, by applying heat from an external source until the exothermic heat evolved from polymerization of the monomers to copolymer is sufficient to at least maintain the polymerization without further addition of heat to the suspension. During the reaction the temperature of the suspension reaches at least 120°C and preferably at least 130°C for a time (usually two hours or less) sufficient to polymerize at least 90 weight percent (preferably at least 99.5 weight percent) of the polymerizable monomer.

Some moderate lowering of the final temperature may be achieved by employing polymerization moderators, such as, for example, α-methylstyrene and by partial removal of heat through the jacket of the reactor, thereby increasing the phase ratio of the reaction mixture. The sensible heat of feed streams into the reactor can also be advantageously used to moderate the final temperature and thus the phase ratio.

The invention is further illustrated by the following Examples in which the quantities are given in parts by weight unless otherwise indicated.

### Example 1

Batch polymerizations were conducted in a 1-gallon (3.8 1) stainless steel jacketed reactor equipped with agitation. The monomer phase was comprised of 683.6 g styrene, 116.4 g 55 percent divinylbenzene (DVB-55), 8 g 50 percent *t*-butyl peroctoate and 0.4 g *t*-butyl perbenzoate. The aqueous phase was comprised of 1276 g water, 320 g 1 percent carboxymethyl methylcellulose (suspending agent) and 4 g 60 percent sodium dichromate (latex polymerization inhibitor). The weight phase ratio (monomer:aqueous) was 1:2. Both phases were loaded into the reactor, which was then sealed and pressure tested. The reactor was purged with nitrogen and the agitation rpm was set. The reactor temperature was ramped to 80°C to initiate the monomer charge and heated as fast as possible, about one-half hour, to the final adiabatic temperature (130°C) to simulate the self-heat ramp. The reactor was held at that temperature for 1 hour and then cooled. The copolymer was unloaded, washed, filtered, dried, and sieved. The copolymer of Example 1 was functionalized by sulfonating the beads with an excess of 99 percent sulfuric acid utilizing methylene chloride as the swelling solvent. The sulfonated beads were hydrated with increasingly diluted sulfuric acid and then backwashed with deionized water to form a strong acid gel cation exchange resin.

The final properties of the resin obtained were:

| | |
|---|---|
| Whole Perfect Beads (WPB) = | 99% |
| Water Retention Capacity = | 50.4% |
| Dry Weight Capacity = | 5.2 meq/g |
| Wet Volume Capacity = | 2.0 meq/ml |
| Crush Strength = | 1290 g/bead |
| Osmotic Shock Resistance = | 90% WPB* |

| | |
|---|---|
| *The percentage of whole perfect beads after 25 cycles of successive washes as follows: 1) 10 percent sodium hydroxide, 2) water, 3) 10 percent sulfuric acid, and 4) water. | |

The final resin properties from the adiabatic polymerization are comparable or superior to those of resins produced conventionally.

Water retention capacity is determined by swelling a weighed amount of resin with water, removing excess water and weighing the fully swollen resin. The resin is then dried on a moisture balance until a constant weight is obtained. Water retention capacity is the ratio of water imbibed to the total combined weight of the resin plus imbibed water.

Dry weight capacity, weak-base capacity, salt-splitting capacity and wet volume capacity are determined by standard analytical techniques. Crush strength is determined by taking a statistically representative sample of at least 30 beads from a given sample of resin or copolymer beads, and determining the force, in grams, needed to fracture each bead using a Chatillon Scale, Model DPP-1KG available from J. Chatillon & Sons Company. Crush resistance is reported as the average of the force measurements obtained for the 30 beads.

### Example 2

The procedure of Example 1 was repeated except that the initiator employed was 5.6 g benzoyl peroxide. The weight phase ratio (monomer:aqueous) was 1:2.

The final properties of the strong acid gel cation exchange resin obtained were:

| | |
|---|---|
| Whole Perfect Beads (WPB) = | 99% |
| Water Retention Capacity = | 50.8% |
| Dry Weight Capacity = | 5.3 meq/g |
| Wet Volume Capacity = | 1.9 meq/ml |
| Crush Strength = | 1840 g/bead |
| Osmotic Shock Resistance = | 97% WPB |

### Example 3

Using the same procedure set forth in Example 1, another batch polymerization was conducted to synthesize a gel copolymer. The monomer phase was comprised of 779.8 g styrene, 19.9 g DVB-55, and 10.9 g benzoyl peroxide. The aqueous phase was comprised of 1313 g water, 287 g 1 percent carboxymethyl methylcellulose, 2.5 g 60 percent sodium dichromate. The weight phase ratio (monomer: aqueous) was 1:2. The copolymer of Example 3 was functionalized by chloromethylating the beads with an excess of chloromethylmethyl ether in the presence of ferric chloride catalyst. The excess ether was destroyed with three methanol washes. The chloromethylated beads were then swollen in methylal and reacted with trimethylamine to form a strong base gel anion exchange resin. The final anion resin properties were:

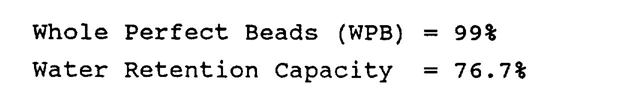

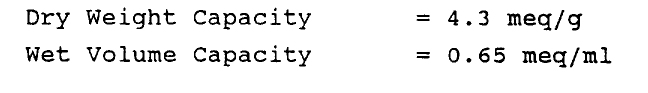

### Example 4

Following the procedure of Example 1, another batch polymerization was conducted to synthesize a macroporous copolymer. The monomer phase was comprised of 506 g styrene, 208 g DVB-55, 284 g *iso*-octane, 3.6 g 50 percent *t*-butyl peroctoate and 1.2 g *t*-butyl perbenzoate. The aqueous phase was comprised of 1182 g water, 314 g 1 percent carboxymethyl methylcellulose and 3.2 g 60 percent sodium dichromate. The weight phase ratio (organic: aqueous) was 2:3. The copolymer beads were washed and then steam distilled to remove the *iso*-octane, and dried before functionalization. The copolymer of Example 4 was functionalized by sulfonating the beads with an excess of 99 percent sulfuric acid. The sulfonated beads were hydrated with increasingly diluted sulfuric acid and then backwashed with deionized water to form a strong acid macroporous cation exchange resin. The final cation resin properties were:

| | |
|---|---|
| Whole Perfect Beads (WPB) = | 99% |
| Water Retention Capacity = | 47.0% (Na⁺) |
| Wet Volume Capacity = | 2.1 meq/ml (Na⁺) |

### Example 5

Following the procedure of Example 4, another batch polymerization was conducted to synthesize a macroporous copolymer. The monomer phase was comprised of 692.4 g styrene, 107.6 g DVB-55, 490 g *iso*-octane, 7.2 g 50 percent *t*-butyl peroctoate and 4.8 g *t*-butyl perbenzoate. The aqueous phase was comprised of 1005 g water, 271 g 1 percent carboxymethyl methylcellulose and 2.7 g 60 percent sodium dichromate. The weight phase ratio (organic: aqueous) was 1:1. The copolymer of Example 5 was functionalized by chloromethylating the beads with an excess of chloromethylmethyl ether in the presence of ferric chloride catalyst. The chloromethylated beads were washed with methanol three times and then reacted with dimethylamine to form a weak base macroporous anion exchange resin. The final anion resin properties were:

| | |
|---|---|
| Whole Perfect Beads (WPB) = | 99% |
| Water Retention Capacity = | 43.3% |
| Dry Weight Capacity = | 5.5 meq/g |
| Wet Volume Capacity = | 2.0 meq/ml |
| Weak Base Capacity = | 1.8 meq/ml |
| Salt Splitting Capacity = | 0.2 meq/ml |

### Example 6

Batch polymerizations were conducted in a 30-gallon (115 1) stainless steel jacketed reactor equipped with agitation. The organic phase was comprised of 24.6 kg styrene, 5.1 kg DVB-55, 64.6 g 50 percent *t*-butyl peroctoate and 14.4 g *t*-butyl perbenzoate. The aqueous phase was comprised of 46.4 kg water, 19.1 kg 0.5 percent carboxymethyl methylcellulose (suspending agent), 163.8 g 60 percent sodium dichromate (latex inhibitor). The mass phase ratio (monomer:aqueous) was 0.45. The reactor was heated from room temperature to 80°C to initiate the monomer charge and allowed to self heat thereafter to the final adiabatic temperature (130°C). The reactor was held at that temperature for 1 hour and then cooled. The copolymer was unloaded, washed, filtered, dried, sieved, and then sulfonated as in Example 1 to form a strong acid gel cation exchange resin. The final cation resin properties were:

| | |
|---|---|
| Whole Perfect Beads (WPB) = | 99% |
| Water Retention Capacity = | 47.9% |
| Wet Volume Capacity = | 2.2 meq/ml |
| Dry Weight Capacity = | 5.3 meq/g |
| Crush Strength = | 1480 g/bead |
| Osmotic Shock Resistance = | 96% |

The final resin properties with the adiabatic polymerization are comparable or superior to that of resins produced conventionally.

### Example 7

Batch seeded polymerizations were conducted in a 1-gallon (3.8 1) stainless steel jacketed reactor equipped with agitation. Polystyrene seeds (100 g) containing 0.3 per-cent DVB-55 were suspended in 1000 g deionized water. The monomer phase comprised of 50 g DVB-55, 650 g styrene and 2.4 g 50 percent *t*-butyl peroctoate and 1.2 g *t*-butyl perbenzoate was added to the reactor and agitated (rpm = 220) for 1 hour. A mixture comprised of 0.8 g 30 percent sodium lauryl sulfate and 40 g deionized water was added and mixed for 30 min. The aqueous phase comprised of 320 g 1 percent carboxymethyl methylcellulose, 3 g 60 percent sodium dichromate solution and 500 g deionied water was added and allowed to mix well. The reactor was ramped from room temperature to 80°C to initiate the monomer charge and was heated as fast as possible, in about 1/2 hour, to the final adiabatic temperature (130°C) to simulate the self heat ramp. The reactor was held at that temperature for 2 hr and then cooled. The copolymer was unloaded, washed, filtered, dried and sieved.

The average seed size determined by microscopy was 220 micrometers (µm) and the average copolymer size was 425 µm, which corresponds to a grow-up of 1.93. The expected grow-up based on the monomers and seed charged is 2.0 which indicates that the seed did imbibe the monomer, with minimal second generation particle formation.

Sulfonations were performed conventionally in 1-liter glass reactors equipped with agitation. Copolymer (60 g) was sulfonated with 480 g 99 percent sulfuric acid and 27 ml methylene chloride (swelling agent). The copolymer was swollen for 30 min and sulfonated for 2 hours at 130°C. The sulfonated resin was hydrated by progressively washing the beads with decreasing concentrations of sulfuric acid and backwashed with deionized water. The final resin properties were:

| | |
|---|---|
| Water Retention Capacity (WRC) = | 78.4% |
| Dry Weight Capacity (DWC) = | 5.3 meq/g |
| Wet Volume Capacity (WVC) = | 1.2 meq/ml |

### Example 8

Batch seeded polymerizations were conducted in a 1-gallon (3.8 1) stainless steel jacketed reactor equipped with agitation. Polystyrene seeds (48.6 g) containing 50 percent isobornyl methacrylate and 0.05 percent DVB-55 were suspended in 500 g deionized water. The monomer phase comprised of 29 g DVB-55, 171 g styrene, 200 g commercial-grade *iso*-octane and 3.0 g 50 percent *t*-butyl peroctoate and 0.6 g *t*-butyl perbenzoate was added to the reactor and agitated (rpm = 230) for 2 hours. A mixture comprised of 428 g 1 percent carboxymethyl methylcellulose, 2.2 g 60 percent sodium dichromate solution and 573 g deionized water was added and allowed to mix well. The reactor was ramped from room temperature to 80°C to initiate the monomer charge and heated as fast as possible, in about 1/2 hr, to the final adiabatic temperature (130°C) to simulate the self heat ramp. The reactor was held at that temperature for 2 hr and then cooled. The copolymer was unloaded, washed, filtered, air-dried and sieved.

The copolymer beads were smooth and opaque. The single point BET surface area was determined to be 25 sq m/g. Most of the pores were >300 Å (30 nm). The pore volume was 0.5 cm³/g, indicating macroporosity.

### Example 9

Batch, continuous-addition, seeded polymerizations were conducted in a 1-gallon (3.8 1) stainless steel jacketed reactor equipped with agitation. A mixture comprised of 843.4 g deionized water, 4.1 g 60 percent sodium dichromate solution and 2.7 g 1 percent sodium lauryl sulfate solution was added to the stirred reactor (rpm=220) with 261.9 g of polystyrene seed containing 0.3 percent DVB-55. The monomer phase comprised of 40.5 g DVB-55, 284.3 g styrene and 3.2 g 50 percent *t*-butyl peroctoate and 1.6 g *t*-butyl perbenzoate was also added to the reactor and agitated for 1 hour. The aqueous phase comprised of 1.7 g gelatin A, 1.7 g gelatin B and 3.9 g 10 percent sodium lauryl sulfate dissolved in 247.3 g hot deionized water was added to the reactor to disperse the swollen seed. The reactor was ramped from room temperature to 80°C to initiate the monomer charge. After a 1/2 hr hold at temperature, the con-add phase comprised of 683.7 g styrene and 38.7 g DVB-55 was added over a 1/2 hour time period. The reactor was simultaneously heated as fast as possible, in about 1/2 hr, to the final adiabatic temperature (140°C) to simulate the self heat ramp. The reactor was held at that temperature for 1 hr and then cooled. The copolymer was unloaded, washed, filtered, dried and sieved.

The volume median seed size was determined as 214 µm and the volume median copolymer size was 346 µm, which corresponds to a grow-up of 1.62. The expected grow-up based on the monomers and seed charged is 1.7 which indicates that the seed did imbibe the monomer, with minimal second generation particles formation.

The sulfonations were performed as in Example 7 to form a strong acid gel cation exchange resin. The final resin properties were:

| | |
|---|---|
| Water Retention Capacity (WRC) = | 63.8% |
| Dry Weight Capacity (DWC) = | 5.3 meq/g |
| Wet Volume Capacity (WVC) = | 1.4 meq/ml |

The water retention capacity for a strong acid sulfonic exchanger is a function of the DVB crosslinkage. For the 3.3 percent crosslink level of this recipe, the WRC for a standard non seeded resin is 75 percent [Ref: *Ion Exchangers,* Ed. K. Dorfner, W.de Gruyter & Co, Berlin, 1991]. The WRC data confirms that the effective crosslink density of the seeded resin is more than that of a nonseeded resin with the same crosslink level.

### Example 10

Batch, in situ, continuous-addition, seeded polymerizations were conducted in a 1-gallon (3.8 l) stainless steel jacketed reactor equipped with agitation. The aqueous phase comprised of 1000 g deionized water, 250 g 1 percent carboxymethyl methylcellulose and 3.1 g 60 percent sodium dichromate solution was added to a stirred reactor (rpm=220). The monomer phase comprised of 49.7 g DVB-55, 341 g styrene, 2.5 g 78 percent benzoyl peroxide and 2.0 g *t*-butyl perbenzoate was also added to the reactor. The droplets were sized for 30 minutes. The reactor was ramped from room temperature to 80°C to initiate the monomer charge. After a 1/2 hour hold at temperature, the con-add phase comprised of 235 g styrene and 23.5 g DVB-55 was added over a 1/2 hour time period. The reactor was simultaneously heated as fast as possible, in about 1/2 hr, to the final adiabatic temperature (130°C) to simulate the self heat ramp. The reactor was held at that temperature for 2 hr and then cooled. The copolymer was unloaded, washed, filtered, dried and sieved.

The sulfonations were performed as in Example 7 to form a strong acid gel cation exchange resin. The final resin properties were:

| | |
|---|---|
| Water Retention Capacity (WRC) = | 49.4% |
| Dry Weight Capacity (DWC) = | 5.1 meq/g |
| Wet Volume Capacity (WVC) = | 2.2 meq/ml |

The water retention capacity for a strong acid sulfonic exchanger is a function of the DVB crosslinkage. For the 6.2 percent crosslink level of this recipe, the WRC for a standard non seeded resin is 60.5 percent. The WRC data confirms that the effective crosslink density of the seeded resin is more than that of a nonseeded resin with the same crosslink level.

The final resin properties with the adiabatic polymerization are comparable or superior to that of resins produced conventionally.

## Claims

1. A process for making crosslinked copolymer beads suitable for making polymeric adsorbents and ion-exchange resins characterized by:
(a) providing a suspension of a monomer mixture within a continuous aqueous suspending medium, the monomer mixture comprising at least one monoethylenically unsaturated monomer selected from styrene, paravinyltoluene, vinyltoluene, vinylbenzyl chloride or ethylvinylbenzene in an amount of from 20 to 99.96 weight percent based on total weight of monomer mixture, at least one polyethylenically unsaturated monomer selected from divinylbenzene, ethylene glycol diacrylate, ethylene glycol dimethacrylate or mixtures thereof in an amount of from 0.04 to 80 weight percent based on total weight of monomer mixture, and an effective amount of free-radical polymerization initiator;
(b) maintaining the suspension under adiabatic conditions sufficient to polymerize the monomer mixture and obtain copolymer beads, the conditions including retention within the suspension of a substantial amount of exothermic heat evolved during polymerization of the monomers to copolymer such that the retention of the exothermic heat results in a rise in temperature of the suspension to at least 120°C for a time sufficient to polymerize at least 90 weight percent of the polymerizable monomer based on total weight of the monomer in the mixture; and
(c) recovering the copolymer beads from the suspension.

2. A process as claimed in Claim 1, wherein the suspension reaches a temperature of at least 130°C.

3. A process as claimed in Claim 1 or Claim 2, wherein the conditions include maintaining the suspension at an initial temperature of at least 40°C by applying heat from an external source until the exothermic heat evolved from polymerization of the monomer to copolymer is sufficient to at least maintain the polymerization without addition of heat to the suspension.

4. A process as claimed in Claim 3, wherein the initial temperature is at least 70°C.

5. A process as claimed in any one of the preceding claims, wherein the free-radical initiator is selected from peroxide, peroxyesters, azo compounds, and mixtures thereof, and is present in an amount from 0.05 to 2.0 weight percent based on the total weight of the monomer mixture.

6. A process as claimed in Claim 5, wherein the free-radical initiator is selected from benzoyl peroxide, t-butyl peroctoate, t-butyl perbenzoate, and mixtures thereof.

7. A process as claimed in any one of the preceding claims, wherein the monomer mixture contains an inert diluent.

8. A process as claimed in any one of the preceding claims, wherein the monomer is imbibed into a seed polymer.

9. A process as claimed in any one of Claims 1 to 7, wherein a portion of the monomer is added to the polymerization as it proceeds.

10. A process as claimed in any one of the preceding claims, wherein the monomer mixture comprises styrene and divinylbenzene.

## Patentansprüche

1. Verfahren zum Herstellen quervernetzter Copolymer-Beads, die zur Herstellung von polymeren Adsorbentien und von Ionenaustauschharzen geeignet sind, gekennzeichnet durch:
(a) Bereitstellen einer Suspension eines Monomergemisches in einem kontinuierlichen wässrigen Suspensionsmedium, wobei das Monomergemisch mindestens ein monoethylenisch ungesättigtes Monomer, ausgewählt aus Styrol, Paravinyltoluol, Vinyltoluol, Vinylbenzylchlorid oder Ethylvinylbenzol in einer Menge von 20 bis 99,96 Gew.-% bezogen auf das Gesamtgewicht des Monomergemisches, mindestens ein polyethylenisch ungesättigtes Monomer, ausgewählt aus Divinylbenzol, Ethylenglykoldiacrylat, Ethylenglykoldimethacrylat und Gemischen davon in einer Menge von 0,04 bis 80 Gew.-% bezogen auf das Gesamtgewicht des Monomergemisches, und eine wirksame Menge eines radikalischen Polymerisationsinitiators umfaßt,
(b) Halten der Suspension unter adiabatischen Bedingungen, die ausreichend sind um das Monomergemisch zu polymerisieren und Copolymer-Beads zu erhalten, wobei die Bedingungen umfassen das Rückhalten einer beträchtlichen Menge exothermer Wärme, die während der Polymerisation der Monomere zu Copolymer entstanden ist, in der Suspension, so daß das Rückhalten der exothermen Wärme eine Temperaturerhöhung der Suspension auf mindestens 120°C für einen ausreichenden Zeitraum zur Folge hat, um mindestens 90 Gew.-% des polymerisierbaren Monomers, bezogen auf das Gesamtgewicht des Monomers im Gemisch zu polymerisieren, und
(c) Gewinnen der Copolymer-Beads aus der Suspension.

2. Verfahren nach Anspruch 1, wobei die Suspension eine Temperatur von mindestens 130°C erreicht.

3. Verfahren nach Anspruch 1 oder Anspruch 2, wobei die Bedingungen umfassen das Halten der Suspension bei einer Anfangstemperatur von mindestens 40°C durch Zuführen von Wärme aus einer externen Quelle bis die aus der Polymerisation des Monomers zu Copolymer entstandene exotherme Wärme ausreichend ist, um die Polymerisierung ohne Zufuhr von Wärme zu der Suspension mindestens aufrechtzuerhalten.

4. Verfahren nach Anspruch 3, wobei die Anfangstemperatur mindestens 70°C beträgt.

5. Verfahren nach einem der vorhergehenden Ansprüche, wobei der radikalische Initiator ausgewählt wird aus Peroxid, Peroxyestern, Azo-Verbindungen und Gemischen davon, und in einer Menge von 0,05 bis 2,0 Gew.-% bezogen auf das Gesamtgewicht des Monomergemisches vorhanden ist.

6. Verfahren nach Anspruch 5, wobei der radikalische Initiator ausgewählt wird aus Benzoylperoxid, t-Butylperoctoat, t-Butylperbenzoat und Gemischen davon.

7. Verfahren nach einem der vorhergehenden Ansprüche, wobei das Monomergemisch ein inertes Verdünnungsmittel enthält.

8. Verfahren nach einem der vorhergehenden Ansprüche, wobei das Monomer in ein Impfpolymer aufgenommen ist.

9. Verfahren nach einem der Ansprüche 1 bis 7, wobei ein Teil des Monomers während des Verlaufs der Polymerisierung zugegeben wird.

10. Verfahren nach einem der vorhergehenden Ansprüche, wobei das Monomergemisch Styrol und Divinylbenzol umfaßt.

## Revendications

1. Procédé de préparation de billes de copolymère réticulé appropriées pour la fabrication d'adsorbants polymères et de résines échangeuses d'ions, caractérisé
(a) en ce que l'on prépare une suspension d'un mélange de monomères dans un milieu de suspension aqueux continu, le mélange de monomères comprenant au moins un monomère possédant une seule insaturation éthylénique choisi parmi le styrène, le para-vinyltoluène, le vinyltoluène, le chlorure de vinylbenzyle ou l'éthylvinylbenzène à raison de 20 à 99,6 % en poids rapporté au poids total du mélange de monomères, au moins un monomère possédant plusieurs insaturations éthyléniques choisi parmi le divinylbenzène, le diacrylate d'éthylèneglycol, le diméthacrylate d'éthylèneglycol ou un mélange de ceux-ci à raison de 0,04 à 80 % en poids rapporté au poids total du mélange de monomères, et une quantité efficace d'un amorceur radicalaire de polymérisation,
(b) en ce que l'on maintient la suspension dans des conditions adiabatiques permettant de polymériser le mélange de monomères et d'obtenir des billes de copolymère, les conditions comprenant la rétention dans la suspension d'une quantité substantielle de la chaleur exothermique libérée pendant la polymérisation des monomères en copolymère, de manière à ce que la rétention de la chaleur exothermique entraîne une augmentation de la température jusqu'à au moins 120 °C pendant une durée suffisante pour polymériser au moins 90 % en poids des monomères polymérisables rapporté au poids total du monomère dans le mélange, et
(c) en ce que l'on récupère les billes de copolymère à partir de la suspension.

2. Procédé conforme à la revendication 1 dans lequel la suspension atteint une température au moins égale à 130 °C.

3. Procédé conforme à la revendication 1 ou 2, dans lequel les conditions englobent le maintient de la suspension à une température initiale au moins égale à 40 °C par application de chaleur provenant d'une source de chaleur externe jusqu'à ce que la chaleur exothermique libérée lors de la polymérisation soit suffisante pour au moins entretenir la polymérisation sans apport de chaleur à la suspension.

4. Procédé conforme à la revendication 3 dans lequel la température initiale est au moins égale à 70 °C.

5. Procédé conforme à une quelconque des revendications précédentes dans lequel l'amorceur radicalaire est choisi parmi les peroxydes, peroxyesters, composés azoïques et mélanges de ceux-ci, et est présent à raison de 0,05 à 2,0 % en poids rapporté au poids total du mélange de monomères.

6. Procédé conforme à la revendication 5 dans lequel l'amorceur radicalaire est choisi parmi le peroxyde de benzoyle, le peroctanoate de t-butyle, le perbenzoate de t-butyle et des mélanges de ceux-ci.

7. Procédé conforme à une quelconque des revendications précédentes dans lequel le mélange de monomères contient un diluant inerte.

8. Procédé conforme à une quelconque des revendications précédentes dans lequel le monomère est imbibé dans un germe de polymère.

9. Procédé conforme à une quelconque des revendications 1 à 7 dans lequel une partie du monomère est ajoutée à la polymérisation au fur et à mesure que celle-ci progresse.

10. Procédé conforme à une quelconque des revendications précédentes dans lequel le mélange de monomères comprend du styrène et du divinylbenzène.
